# EUROPÄISCHE PATENTSCHRIFT

(11) **EP 1 839 943 B1**
(45) Veröffentlichungstag und Bekanntmachung des Hinweises auf die Patenterteilung: **17.06.2009**
(21) Anmeldenummer: 07001695.1
(22) Anmeldetag: 26.01.2007
(51) Int. Cl.: B60P 7/08, B60R 5/04, B60R 7/02

(54) **Fahrzeug**
Vehicle
Véhicule

(30) Priorität: 01.04.2006 DE 102006015185
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Bäuerle, Hans-Peter, 71287 Weissach (DE)

(56) Entgegenhaltungen:
- WO-A-01/89878
- WO-A-20/05065993

## Beschreibung

Die Erfindung bezieht sich auf ein Fahrzeug mit einem Laderaum nach dem Oberbegriff des Anspruchs 1.

Aus der DE 199 48 647 A1 ist zur Abdeckung eines Stauraumes bzw. Laderaumes im Kraftfahrzeug eine Abdeckplatte bekannt, die sich an Auflageflächen des Fahrzeugaufbaus abstützt und mit seitlichen Profilelementen eine ebene Ladefläche ergibt, die von einem Teppich abgedeckt ist.

Die gattungsbildende WO 2005/065993 A offenbart ein Fahrzeug mit einem Laderaum, in dem ein Transport-Sicherungssytem angeordnet ist, welches mindestens zwei Halteschienen umfasst, die in Fahrzeuglängsrichtung verlaufen und benachbart von Fahrzeugseitenwänden angeordnet sind, wobei zwischen vorstehend zum Laderaumboden angeordneten Halteschienen des Transport-Sicherungssystems in einem zu den Halteschienen vertieft liegenden Raum ein Laderaumboden angeordnet ist. Dieser liegt auf seitlich abstehenden Laschen der Halteschiene auf.

Aus der WO 01/89878 A geht eine Bodenplatte für einen Abteilbereich eines Fahrzeuges hervor, wobei die Bodenplatte eine erste Oberfläche und eine zweite Oberfläche aufweist wobei sich bei eingesetzter Bodenplatte eine ebene Ladefläche ergibt. Bei D2 sind keine in Fahrzeuglängsrichtung verlaufende und benachbart von Fahrzeugseitenwänden angeordnete Halteschienen vorgesehen, sondern eine der beiden Oberflächen der Bodenplatte ist mit einer Anzahl von drehbaren Lagermitteln versehen.

Aufgabe der Erfindung ist es, einen mit Halteschienen versehenen Laderaum eben auszubilden.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass trotz nach oben vorstehenden Halteschienen eines Transport-Sicherungssystems, eine ebene Ladefläche hergestellt werden kann. Dies erfolgt, indem zwischen den vorstehend zum Laderaumboden angeordneten Halteschienen eine Wendematte eingesetzt wird, und somit eine ebene und niveaugleiche Laderaumfläche gebildet werden kann.

Die vorstehende Anordnung der Halteschienen im Laderaum ist bauart bedingt, da ein Tiefersetzen dieser Halteschienen aufgrund des vorgegebenen Bauraumes im Fahrzeugaufbau nicht möglich ist.

Damit die niveaugleiche Ausfüllung des vertieft liegenden Raumes zwischen den Halteschienen möglich wird, weist die Wendematte eine dementsprechende Dicke auf, die den durch die vorstehenden Halteschienen gebildeten Raum nach oben hin soweit ausfüllt, dass diese sich mit ihrer Außenoberfläche bis zum Niveau der Halteschienen bzw. deren Abdeckungen erstrecken.

Die Wendematte ist so ausgestaltet, dass sie auf einer Seite eine Teppichoptik aufweist und auf einer Rückseite als Antirutschmatte mit einer schmutzunempfindlichen Oberfläche ausgeführt ist. Des Weiteren weist die Wendematte eine äußere profilierte Einfassung auf, die unmittelbar an die Abdeckungen bzw. an die Halteschienen anschließt.

Die Wendematte erstreckt sich über die gesamte Länge des Laderaumbodens, wobei eine Stirnfläche der Wendematte mit einem lappenförmigen Teil 8 ausgeführt ist, der sich zusätzlich über die Breite der Halteschiene erstreckt. Durch diese Ausführung ist die gesamte Laderaumfläche insbesondere zwischen den Halteschienen und stirnseitig der Halteschienen von der Wendematte bedeckt.

In einer weiteren Ausführungsform kann die Wendematte sich auch zwischen den Seitenwänden oder deren Innenverkleidung erstrecken und weist hierzu einen schlitzförmigen Ausschnitt für den Durchtritt der Halteschienen auf, wobei ein Teil der Wendematte sich dann zwischen der Seitenwand und der Halteschiene bzw. der Abdeckung erstreckt.

Ein Ausführungsbeispiel der Erfindung ist in den Zeichnungen dargestellt und wird im Folgenden näher beschrieben.

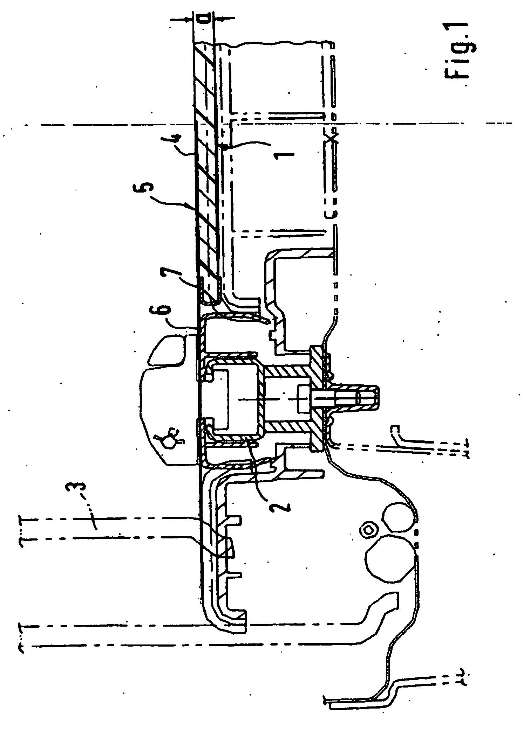

Es zeigen
- Fig. 1: einen Vertikalschnitt durch einen Laderaumboden eines Kraftfahrzeugs mit zwischenliegender Wendematte,
- Fig. 2: eine schaubildliche Darstellung der eingesetzten Wendematte,
- Fig. 3: einen Teil der Wendematte und
- Fig. 4: eine weitere Ausführung der Wendematte mit eingeschlossener Halteschiene.

Ein Laderaumboden 1 eines Kraftfahrzeugs eines Transport-Sicherungssystems, im Wesentlichen bestehen aus zwei Halteschienen 2, wovon nur eine Halteschiene dargestellt ist. Die Halteschienen 2 erstrecken sich in Fahrzeuglängsrichtung L und sind beabstandet zueinander und nahe einer Seitenwand 3 bzw. einer Seitenwandverkleidung im Fahrzeugaufbau angeordnet.

Die Halteschienen 2 sind um ein Maß a vorstehend zum eigentlichen Laderaumboden angeordnet. Zum Ausgleich dieses zu den Halteschienen 2 vertieft liegenden Raumes, wird eine Wendematte 4 in diesen Raum eingesetzt. Die Wendematte ist mit ihrer Außenoberfläche 5 niveaugleich zur Außenseite einer die Halteschienen 2 abdeckenden Verkleidung 6 vorgesehen oder wenn keine Verkleidung 6 vorliegt, ist die Außenoberfläche der Halteschiene 2 niveaugleich mit der Außenoberfläche 5 der Wendematte 4 ausgeführt.

Die Wendematte 4 weist auf einer Seite eine Teppichoptik und auf der abgekehrten Seite ein Antirutschprofil auf. Zur Einfassung der Wendematte 4 ist eine profilierte Umrandung 7 vorgesehen, die sich unmittelbar an der Abdeckung 6 oder an den Halteschienen 2 anschließt.

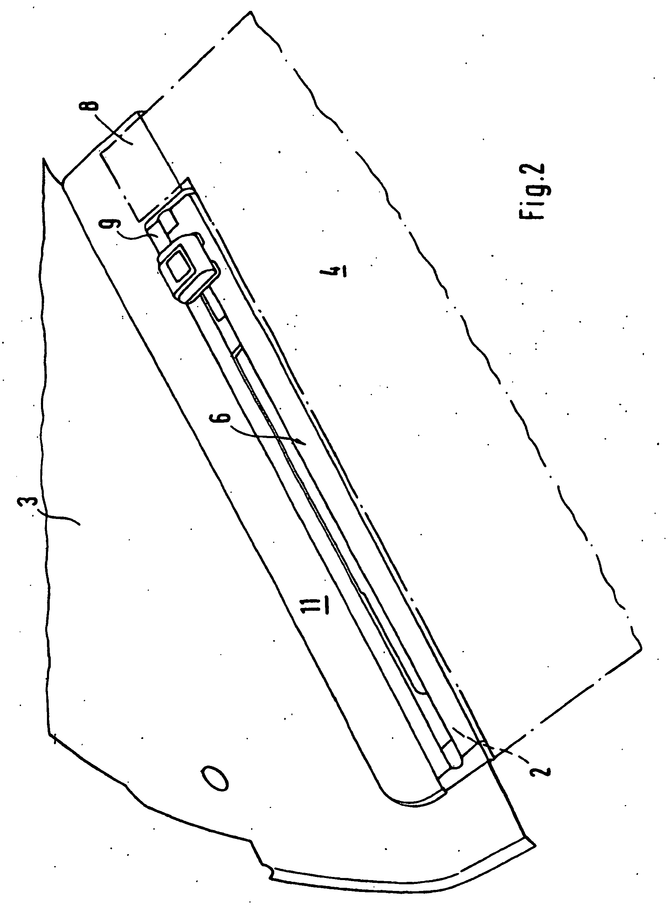

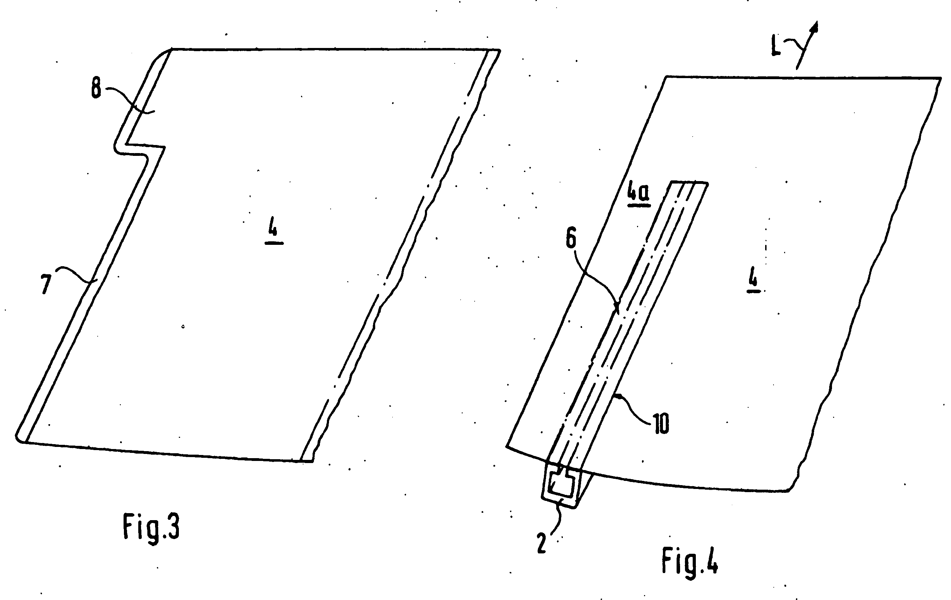

Die Wendematte 4 erstreckt sich vorzugsweise über die gesamte Länge des Laderaumes bzw. des Laderaumbodens 1. Wie in den Fig. 2 und 3 näher dargestellt, ist die Wendematte 4 stirnseitig mit einem lappenförmigen Teil 8 am freien Ende 9 der Halteschienen 2 versehen.

Nach einer weiteren Ausführung gem. Fig. 4, kann die Wendematte 4 mit einem Schlitz 10 für die Halteschiene 2 bzw. für die Abdeckung 6 versehen sein, in der Weise, dass auch der Raum 11 zwischen der Seitenwand 3 bzw. der Seitenwandverkleidung und der Halteschiene 2 bzw. der Abdeckung 6 von dem Teilstück 4a der Wendematte belegt sei.

## Patentansprüche

1. Fahrzeug mit einem Laderaum, in dem ein Transport-Sicherungssystem angeordnet ist, welches mindestens zwei Halteschienen umfasst, die in Fahrzeuglängsrichtung verlaufen und benachbart von Fahrzeugseitenwänden angeordnet sind, **dadurch gekennzeichnet, dass** zwischen vorstehend zum Laderaumboden (1) angeordneten Halteschienen (2) des Transport-Sicherungssystems in einem zu den Halteschienen (2) vertieft liegenden Raum eine Wendematte (4) angeordnet ist, wobei die Wendematte (4) auf einer Seite eine Teppichoptik aufweist und auf einer Rückseite als Antirutschmatte mit einer schmutzunempfindlichen Oberfläche ausgeführt ist.

2. Fahrzeug nach Anspruch 1, **dadurch gekennzeichnet, dass** die Wendematte (4) mit einer Außenoberfläche (5) niveaugleich mit einer Außenoberfläche der Halteschienen (2) oder einer Abdeckung (6) der Halteschienen (2) angeordnet ist.

3. Fahrzeug nach den Ansprüchen 1 oder 2, **dadurch gekennzeichnet, dass** die Wendematte (4) eine äußere profilierte Einfassung (7) aufweist, die unmittelbar an die Abdeckung (6) der Halteschienen (2) oder an die Halteschiene (2) direkt anschließt.

4. Fahrzeug nach einem oder mehreren der Ansprüche, **dadurch gekennzeichnet, dass** die Wendematte (4) sich über die gesamte Länge des Laderaumbodens (1) erstreckt und eine Stirnfläche der Wendematte (4) mit einem sich über die Breite der Halteschiene (2) erstreckendem lappenförmigen Teil (8) versehen ist.

5. Fahrzeug nach einem oder mehreren der vorhergehenden Ansprüche, **dadurch gekennzeichnet, dass** die Wendematte (4) sich zwischen den Seitenwänden (3) des Fahrzeugs oder deren Innenverkleidung erstreckt und einen schlitzförmigen Ausschnitt (10) für die Halteschienen (2) bzw. deren Abdeckung (6) aufweist, wobei ein Teil (4a) der Wendematte (4) sich zwischen der Seitenwand (3) und den Halteschienen (2) bzw. den Abdeckungen (6) erstreckt.

## Claims

1. Vehicle having a cargo space in which there is arranged a transport securing system which comprises at least two retaining rails which run in the vehicle longitudinal direction and are arranged next to vehicle side walls, **characterized in that** a reversible mat (4) is arranged in a space between retaining rails (2) of the transport securing system, which space lies sunken relative to the retaining rails (2), and which rails are arranged projecting relative to the cargo space floor (1), the reversible mat (4) having a carpet-like appearance on one side and being designed on a rear side as an anti-slip mat with a dirt-repellent surface.

2. Vehicle according to Claim 1, **characterized in that** the reversible mat (4) is arranged with an outer surface (5) at the same level as an outer surface of the retaining rails (2), or at the same level as a cover (6) of the retaining rails (2).

3. Vehicle according to Claim 1 or 2, **characterized in that** the reversible mat (4) has an outer profiled border (7) which immediately adjoins the cover (6) of the retaining rails (2) or directly adjoins the retaining rail (2).

4. Vehicle according to one or more of the preceding claims, **characterized in that** the reversible mat (4) extends over the entire length of the cargo space floor (1), and an end face of the reversible mat (4) is provided with a flap-shaped part (8) extending over the width of the retaining rail (2).

5. Vehicle according to one or more of the preceding claims, **characterized in that** the reversible mat (4) extends between the side walls (3) of the vehicle or the internal lining thereof, and has a slot-shaped cutout (10) for the retaining rails (2) or the cover (6) thereof, a part (4a) of the reversible mat (4) extending between the side wall (3) and the retaining rails (2) or the covers (6).

## Revendications

1. Véhicule comprenant un espace de chargement dans lequel est disposé un système de fixation pour le transport, qui comprend au moins deux rails de retenue qui s'étendent dans la direction longitudinale du véhicule et qui sont disposés a proximité de parois latérales du véhicule, **caractérisé en ce qu'**un tapis amovible (4) est disposé entre des rails de retenue (2) disposés en saillie par rapport au fond de l'espace de chargement (1), dans un espace renfoncé par rapport aux rails de retenue (2), le tapis amovible (4) présentant sur un côté un aspect de tapis et étant réalisé sur un côté arrière avec une surface insensible aux salissures en tant que tapis antidérapant.

2. Véhicule selon la revendication 1, **caractérisé en ce que** le tapis amovible (4) est disposé avec une surface supérieure (5) au même niveau qu'une surface extérieure des rails de retenue (2) ou qu'un recouvrement (6) des rails de retenue (2).

3. Véhicule selon les revendications 1 ou 2, **caractérisé en ce que** le tapis amovible (4) présente un encadrement extérieur profilé (7) qui se raccorde directement au recouvrement (6) des rails de retenue (2) ou directement au rail de retenue (2).

4. Véhicule selon l'une quelconque ou plusieurs des revendications précédentes, **caractérisé en ce que** le tapis amovible (4) s'étend sur toute la longueur du fond de l'espace de chargement (1) et **en ce qu'**une surface frontale du tapis amovible (4) est pourvue d'une partie (8) en forme de patte s'étendant sur la largeur du rail de retenue (2).

5. Véhicule selon l'une quelconque ou plusieurs des revendications précédentes, **caractérisé en ce que** le tapis amovible (4) s'étend entre les parois latérales (3) du véhicule ou de son habillage intérieur et présente une partie découpée en forme de fente (10) pour les rails de retenue (2) ou leur recouvrement (6), une partie (4a) du tapis amovible (4) s'étendant entre la paroi latérale (3) et les rails de retenue (2) ou les recouvrements (6).
